Europäisches Patentamt

European Patent Office

Office européen des brevets

(11) Veröffentlichungsnummer: **0 043 972**
**B1**

# EUROPÄISCHE PATENTSCHRIFT

(45) Veröffentlichungstag der Patentschrift:
28.03.84

(21) Anmeldenummer: 81105030.1

(22) Anmeldetag: 29.06.81

(51) Int. Cl.³: **H 02 P 9/10,** H 02 J 3/24,
G 05 B 5/01

(54) Schaltungsanordnung zur Bedämpfung von Leistungspendelungen von Synchrongeneratoren in Netzen.

(30) Priorität: 11.07.80 DE 3026360

(43) Veröffentlichungstag der Anmeldung:
20.01.82 Patentblatt 82/3

(45) Bekanntmachung des Hinweises auf die Patenterteilung:
28.03.84 Patentblatt 84/13

(84) Benannte Vertragsstaaten:
BE CH FR GB LI NL SE

(56) Entgegenhaltungen:
EP - A - 0 011 807
DE - B - 1 214 313
US - A - 3 465 235
US - A - 3 477 014

IEEE TRANSACTIONS ON POWER APPARATUS AND
SYSTEMS, Band PAS-87, Nr. 6, Juni 1968, Seiten
1426-1434 New York, U.S.A. FERBER R. SCHLEIF et al.:
"Excitation control to improve power-line stability"

(73) Patentinhaber: SIEMENS AKTIENGESELLSCHAFT,
Berlin und München Wittelsbacherplatz 2,
D-8000 München 2 (DE)

(72) Erfinder: Kaufhold, Wolfgang, Dipl.-Ing., Lannersberg 15,
D-8520 Erlg.-Tennenlohe (DE)

## Schaltungsanordnung zur Bedämpfung von Leistungspendelungen von Synchrongeneratoren in Netzen

Die Erfindung betrifft eine Schaltungsanordnung zur Bedämpfung von Leistungspendelungen von Synchrongeneratoren in Netzen nach dem Oberbegriff des Patentanspruchs 1.

Die Schaltungsanordnungen zur Bedämpfung von Leistungspendelungen von Synchrongeneratoren in Netzen durch von Leistungsänderungen abgeleiteten, auf die Erregeranordnung mindestens einer Synchronmaschine geführten Signalen sind so bemessen, dass sie für einen bestimmten begrenzten Frequenzbereich ein von Änderungen der Leistung des Netzes abgeleitetes Dämpfungssignal bilden, das den Spannungsregler im Sinne einer Beseitigung der Auswirkungen der Leistungsänderungen beeinflusst. Bei Verwendung von Filtern hat das Dämpfungssignal in dem gewählten Bereich nur für eine Pendelfrequenz eine optimale Phasenlage, so dass für einen betriebsmässig erforderlichen Bereich von Pendelfrequenzen mit im ganzen Bereich bestmöglichster Phasenlage eine entsprechende Vielzahl unterschiedlich ausgelegter Filter vorgesehen werden muss, die sich aber gegenseitig in unerwünschter Weise beeinflussen können.

Der Erfindung liegt die Aufgabe zugrunde, eine solche gegenseitige Beeinflussung der einzelnen Filter und für einen im Hindblick auf die Pendelungen besonders kritischen unteren Frequenzbereich zu grosse Blindleistungsänderungen der Synchronmaschine zu vermeiden.

Die Aufgabe wird durch die kennzeichnenden Massnahmen nach dem Patentanspruch 1 gelöst. Eine Ausgestaltung der Erfindung ist Gegenstand des abhängigen Anspruchs 2.

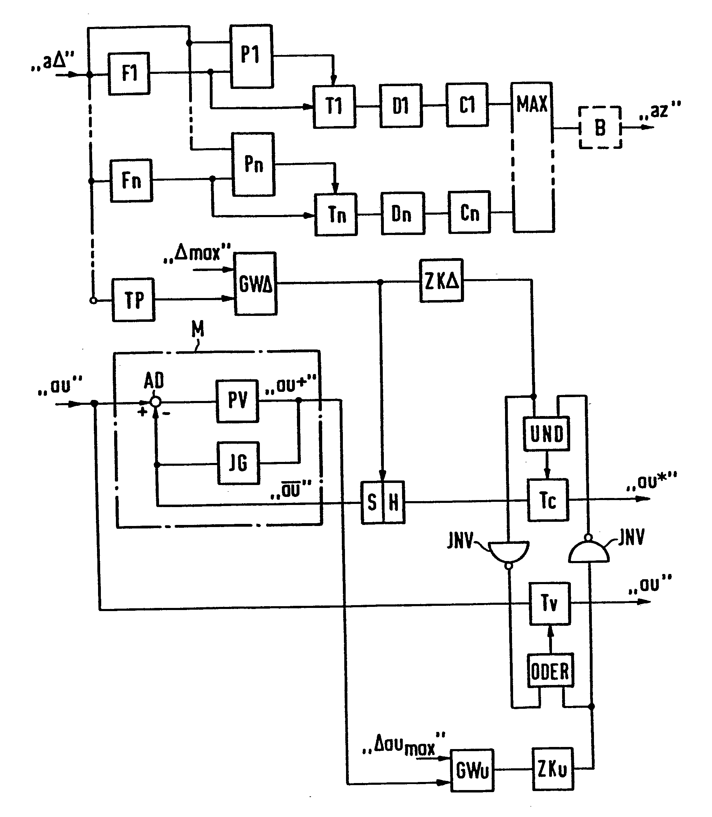

Ein bevorzugtes Ausführungsbeispiel der Schaltung nach der Erfindung ist in der Zeichnung als Blockschaltbild dargestellt und nachfolgend näher erläutert.

Das der jeweils auftretenden Pendelung charakteristische, einer bestimmten Leistungs- und/oder Frequenzänderung $\Delta P$ bzw. $\Delta f$ jeweils entsprechende Signal $a\Delta$ wird gleichzeitig den verschieden abgestimmten diskreten Filtern F1 bis Fn zugeführt, wobei nur das auf das gerade anstehende Signal $a\Delta$ abgestimmte Filter eine durch minimalen Phasenwinkel $\zeta$ zwischen Eingang und Ausgang gekennzeichnete optimale Ausgangsgrösse aufweist, die einem elektronischen Schalter T1 bis Tn in Form einer Torschaltung zugeführt wird. Jeder Schalter T1 bis Tn ist für sich in Schaltabhängigkeit vom Ausgang jeweils eines zugeordneten Winkelmessers P1 bis Pn gebracht, dem eingangsseitig sowohl das Signal $a\Delta$ als auch die Ausgangsgrösse des betreffenden abgestimmten Filters zugeführt wird, wobei nur in dem Falle eine Ausgangsgrösse auf den betreffenden Schalter gelangt und diesen in den stromdurchlässigen Zustand versetzt, wenn $\Delta\zeta \leqslant \varepsilon$ ist, so dass das Ausgangssignal des optimal abgestimmten Filters über einen zugeordneten Phasendreher D1 bis Dn und ein nachgeordnetes grössenbestimmendes Anpassungsglied C1 bis Cn auf eine für alle Teilfilterkreise gemeinsame Maximum-Auswahl MAX geführt wird, die über einen nachgeschalteten gemeinsamen Amplitudenbegrenzer B ein Dämpfungssignal az als zusätzliches Eingangssignal für den nicht gezeigten Regler eines das Netz speisenden Synchrongenerators abgibt. Die Phasendreher und die Anpassungsglieder haben die Aufgabe, die Ausgangssignale der einzelne Filter in Signale definierter Phasenlage und Amplitude gegenüber dem Signal $a\Delta$ zu verwandeln. Die jeweils anderen, auf das gerade anstehende Signal $a\Delta$ nicht abgestimmten Filter geben, wenn überhaupt, nur eine geringere Ausgangsgrösse bei $\Delta\zeta \approx \varepsilon$ ab, wodurch die zugeordneten Winkelmesser nicht zur Abgabe eines Einschalt-Steuerbefehls für die ihnen zugeordneten Schalter T1 bis Tn veranlasst werden.

Mit abnehmenden Pendelfrequenzen muss eine Unterteilung in immer kleinere Frequenzbereiche vorgenommen werden, um eine optimale Phasenlage zu erzielen, da sonst unerwünscht grosse Blindleistungsänderungen auftreten können. Diese feine Unterteilung erfordert aber eine Vielzahl von entsprechend abgestimmten diskreten Filtern.

Um den besagten Aufwand an Filtern für die unteren Pendelfrequenzen ab ca. 0,3 Hz wesentlich zu vermindern, werden vorteilhafterweise unter Berücksichtigung der natürlichen Dämpfung solcher Synchrongeneratoren bei ausgesetzter Spannungsregelung die in diesem Pendelfrequenzbereich auftretenden grösseren Spannungsschwankungen ausgenutzt, um den Ausgang des Spannungsreglers für eine bestimmte Zeit auf einem kontinuierlich gebildeten Mittelwert zu halten. Die während dieser Zeit eventuell auftretenden sehr grossen Änderungen der Generatorspannung infolge der unwirksamen Spannungsregler, z.B. bei Kurzschluss oder Lastabwurf, machen für eine ausreichend lange Zeitspanne die Umschaltung von geregelten auf ungeregelten Generatorbetrieb rückgängig, um die Stabilität zu erhalten bzw. die auftretende Spannungserhöhung abzubauen. Hierzu wird das besagte Signal $a\Delta$ zusätzlich auf einen Tiefpass TP höherer Ordnung mit einer Grenzfrequenz von 0,3 Hz geführt, dessen Ausgang mit dem einen Eingang eines Grenzwertmelders GW$\Delta$ verbunden ist. Der andere Eingang des Grenzwertmelders ist mit der Änderungsamplitude $\Delta$ max beaufschlagt. Der Ausgang des Grenzwertmelders GW$\Delta$ ist mit einer Zeitkippstufe ZK$\Delta$ und einer Abtast- und Halteschaltung SH verbunden.

Bei Überschreiten der dem Grenzwertmelder GW$\Delta$ zugeführten Ausgangsgrösse des Tiefpasses TP über Änderungsamplitude $\Delta$ max spricht der Grenzwertmelder an und steuert sowohl die Zeitkippstufe ZK$\Delta$ als auch die Abtast- und Halteschaltung SH so an, dass der mittels eines üblichen Mittelwertbildners M mit relativ grosser Integrationszeit festgehaltene Ausgang au des nicht gezeigten Spannungsreglers des Synchrongenerators in einer nachgeschalteten Torschaltung Tc in eine gemittelte Grösse au für die Beeinflussung der nicht gezeigten Erregeranordnung des Synchrongenerators umgebildet wird. Der einen Proportionalverstärker PV und ein Integrierglied JG aufweisende Mittelwertbildner M enthält noch eine Additionsstufe AD, die beide vorgenannten Teile miteinander verbindet.

Der Ausgangsmittelwert $\overline{au}$ des Mittelwertbildners M gelangt über die angesteuerte Abtast- und Halteschaltung SH auf die besagte angesteuerte Torschaltung TC während der durch die Zeitkippstufe ZKΔ bestimmten Zeitdauer, sofern die UND-Bedingungen für das UND-Glied erfüllt sind, so dass am Ausgang der Torschaltung Tc die gemittelte Grösse au* auftritt.

Wenn die am Ausgang des Proportionalverstärkers PV auftretende veränderliche Grösse $au^+$ grösser als der Maximalwert $\Delta au_{max}$ wird, die beide den getrennten Eingängen eines zweiten Grenzwertmelders GWu zugeführt sind, dann spricht der Grenzwertmelder GWu an und steuert während der Zeitdauer einer nachgeordneten Zeitkippstufe ZKu über ein ODER-Glied eine zweite Torschaltung Tv an, so dass das ursprüngliche Reglersignal au allein für die Erregeranordnung wirksam werden kann. Zur gegenseitigen Beeinflussung beider Torschaltungen Tv und Tc sind die Eingänge des UND-Gliedes und des ODER-Gliedes über invertierende Schaltelemente INV gekoppelt, so dass stets nur eine der beiden Torschaltungen stromdurchlässig angesteuert ist.

Die Rückschaltung von der Torschaltung Tc auf die Torschaltung Tv erfolgt, wenn die Kippzeit der Zeitkippstufe ZKΔ abgelaufen ist. Bei grossen Signaländerungen des Spannungsreglers im Falle eines Kurzschlusses oder Lastabwurfes erfolgt die Umschaltung durch die Grenzwertstufe GWu über deren nachgeordnete Zeitkippstufe ZKu für eine bestimmte kürzere Zeit zum Unterschreiten des Grenzwertes $\Delta au_{max}$.

## Patentansprüche

1. Schaltungsanordnung zur Bedämpfung von Leistungspendelungen von Synchrongeneratoren in Netzen, bei der für die einzelnen Pendelfrequenzbereiche abgestimmte diskrete Filter vorgesehen sind, deren Ausgangsgrössen als dämpfende Zusatzsignale für die Regelung der Synchrongeneratoren benutzt sind, dadurch gekennzeichnet, dass das jeweilige der Frequenz- oder Leistungsänderung ($\Delta f$, $\Delta P$) entsprechende Eingangssignal (aΔ) der Schaltungsanordnung sowohl den Eingängen der einzelnen Filter (F1 bis Fn) als auch den Eingängen dieser jeweils zugeordneten Winkelmesser (P1 bis Pn) zugeführt ist und dass die Ausgänge der Filter jeweils mit den zweiten Eingängen der zugeordneten Winkelmesser und ausserdem mit von diesen in Schaltabhängigkeit gebrachten Schaltgliedern (T1 bis Tn) verbunden sind, die ihrerseits jeweils über Phasendreher (D1) und Anpassungsglieder (C1) mit einem gemeinsamen Maximum-Auswahlglied (MAX) für die Abgabe eines Dämpfungssignals (az) auf die Regeleinrichtung des Synchrongenerators verbunden sind.

2. Schaltungsanordnung nach Anspruch 1 für einen kritischen unteren Pendelfrequenzbereich, dadurch gekennzeichnet, dass ein auf diesen Pendelfrequenzbereich abgestimmter Tiefpass höherer Ordnung (TP) vom Eingangssignal (aΔ) beaufschlagt ist und über einen Grenzwertmelder (GWΔ) mit einer Zeitkippstufe (ZKΔ) und einer Abtast- und Halteschaltung (SH) in Steuerverbindung steht, von denen die Abtast- und Halteschaltung (SH) als Schaltglied zwischen einer ein verzögertes Signal ("au") abgebenden Torschaltung (Tc) und dem Mittelwertsausgang ("$\overline{au}$") eines eingangsseitig vom Reglersignal (au) beaufschlagten Mittelwertbildners (M) angeordnet ist und die Zeitkippstufe (ZKΔ) über ein UND-Glied mit der Torschaltung (Tc) in Steuerverbindung steht, dass ferner der Eingang des Mittelwertbildners (M) über eine steuerbare Torschaltung (Tv) das Reglersignal (au) direkt der Erregeranordnung zuführt, wenn bei gesperrter Torschaltung (Tc) eine weitere Torschaltung (Tv) stromdurchlässig ist, wozu diese über ein ODER-Glied in Steuerabhängigkeit von einer der Abweichung des Reglersignales vom Mittelwert proportionalen Ausgangsgrösse ($au^+$) des Mittelwertbildners (M) über einen Grenzwertmelder (GWu) mit nachgeordneter Zeitkippstufe (ZKu) gebracht ist und die UND- und ODER-Glieder über invertierende Schaltelemente (JNV) gegenseitig schaltend verbunden sind.

## Claims

1. Circuit arrangement for damping oscillations in the output of synchronous generators in power systems, in which discrete filters tuned for the individual oscillation frequency ranges are provided, whose output values are used as auxiliary damping signals to regulate the synchronous generators, characterised in that the respective input signal (aΔ) of the circuit arrangement corresponding to the change in frequency or output ($\Delta f$, $\Delta P$) is fed both to the inputs of the individual filters (F1 to Fn) and to the inputs of the respective angle measurers (P1 to Pn) associated therewith, and in that the outputs of the filters are respectively connected to the second inputs of the associated angle measurers, and also to switch members (T1 to Tn) which are in switch dependence on these, and which in turn are connected respectively *via* phase shifters (D1) and matching members (C1) to a common maximum-selection member (MAX) for the emission of a damping signal (az) to the regulating device of the synchronous generator.

2. Circuit arrangement according to claim 1 for a critical lower oscillation frequency range, characterised in that a low-pass filter of a higher order (TP) tuned to this oscillation frequency is acted upon by the input signal (aΔ) and is in control connection *via* a threshold value indicator (GWΔ) with a timed switching stage (ZKΔ) and a

sample-and-hold circuit (SH) is arranged as a switching member between a gate circuit (Tc) emitting a delayed signal ("au*") and the mean value output ("$\overline{au}$") of a mean value former (M) acted upon on the input side by the regulator signal (au), and the timed switching stage (ZKΔ) is in control connection with the gate circuit (Tc) *via* an AND member, also in that the input of the mean value former (M) carries the regulator signal (au), *via* a controllable gate circuit (Tv), directly to the exciter arrangement, if a further gate circuit (Tv) is permeable to current when the gate circuit (Tc) is blocked, for which purpose the gate circuit (Tv) is made, *via* an OR member, control-dependent on an output value (au$^+$) of the mean value former (M) proportional to the deviation of the regulating signal from the mean value, *via* a threshold value indicator (GWu) with a subsequently connected timed switching stage (ZKu), and the AND and OR members are connected to be mutually actuating by means of inverting switch elements (JNV).

**Revendications**

1. Circuit pour l'amortissement d'oscillations de la puissance de générateurs synchrones dans des réseaux, dans lequel on prévoit des filtres discrets et accordés pour les différentes gammes des fréquences de découpage, dont les grandeurs de sortie sont utilisées comme signaux supplémentaires d'amortissement pour le réglage des générateurs synchrones, caractérisé par le fait que le signal d'entrée (aΔ) du circuit, qui correspond à la variation de la fréquence ou de la puissance (Δf, ΔP), est appliqué aussi bien aux entrées des différents filtres (F1 à Fn) qu'aux entrées des dispositifs de mesure du déphasage (P1 à Pn) respectivement associées à ces derniers, et que les sorties du filtre sont respectivement reliées aux secondes sorties d'un dispositif de mesure du déphasage associées et, en outre, à des dispositifs de commutation (T1 à Tn) qui sont rendus, du point de vue de la commutation, dépendants de ceux-ci, lesdits dispositifs de commutation étant, à leur tour, respectivement reliés, par l'intermédiaire de déphaseurs (D1) et d'éléments adaptateurs (C1), à un dispositif de sélection du maximum (MAX), en vue de l'émission d'un signal d'amortissement (az) pour le dispositif de réglage du générateur synchrone.

2. Circuit selon la revendication 1 pour une gamme critique inférieure de la fréquence de découpage, caractérisé par le fait qu'un passe-bas (TP) d'ordre supérieur, accordé à cette gamme de fréquence de découpage, est chargé par le signal d'entrée (aΔ) et est relié, par l'intermédiaire d'un dispositif de signalisation de valeur limite (GWΔ), à un étage à bascule à action différée (ZKΔ) et à un circuit d'échantillonnage et de maintien (SH), parmi lesquels le dispositif d'échantillonnage et de maintien (SH) est disposé, en tant que dispositif de commutation, entre un circuit de porte (Tc) émettant un signal retardé ("au*") et la sortie de valeurs moyennes ("$\overline{au}$") d'un formateur de valeurs moyennes (M) chargé, du côté entrée, par le signal du régulateur, alors que l'étage à bascule à action différée (ZKΔ) est, par l'intermédiaire d'un circuit ET, en liaison de commande avec le circuit de porte (Tc), et par le fait qu'en outre l'entrée du formateur de valeurs moyennes (M) applique, par l'intermédiaire d'un circuit de porte contrôlable (Tv), le signal de réglage (au) directement au dispositif d'excitation si, lorsque le circuit de porte (Tc) est bloqué, un circuit de porte supplémentaire (Tv) autorise le passage du courant, ce pourquoi celle-ci est rendue, par l'intermédiaire d'un circuit OU, dépendante de la commande par une grandeur moyenne de sortie (au$^+$) du formateur de valeurs moyennes (M) qui est proportionnelle à l'écart entre le signal du régulateur et la valeur moyenne, par l'intermédiaire du dispositif de signalisation de valeur limite (GWu) à l'étage à bascule à action différée aval (ZKu), les circuits ET et OU étant, par l'intermédiaire d'éléments de commutation inverseurs (JNV), reliés par une commutation réciproque.